# EUROPÄISCHE PATENTSCHRIFT

(11) **EP 1 181 731 B1**
(45) Veröffentlichungstag und Bekanntmachung des Hinweises auf die Patenterteilung: **14.05.2003**
(21) Anmeldenummer: 00918686.7
(22) Anmeldetag: 03.03.2000
(51) Int. Cl.: H01M 8/08

(54) **VERFAHREN ZUM BETREIBEN EINER HTM-BRENNSTOFFZELLE**
METHOD OF OPERATING AN HTM FUEL CELL
PROCEDE PERMETTANT DE FAIRE FONCTIONNER UNE PILE HTM

(30) Priorität: 29.03.1999 DE 19914252
(43) Veröffentlichungstag der Anmeldung: 27.02.2002
(73) Patentinhaber: SIEMENS AKTIENGESELLSCHAFT, 80333 München (DE)
(72) Erfinder: DATZ, Armin, D-91099 Poxdorf (DE); GEBHARDT, Ulrich, D-91094 Langensendelbach (DE); WAIDHAS, Manfred, D-90427 Nürnberg (DE)
(86) Internationale Anmeldenummer: DE0000680
(87) Internationale Veröffentlichungsnummer: WO00059061

(56) Entgegenhaltungen:
- US-A- 5 302 471
- PATENT ABSTRACTS OF JAPAN vol. 1999, no. 11, 30. September 1999 (1999-09-30) & JP 11 154529 A (TOKYO GAS CO LTD), 8. Juni 1999 (1999-06-08)

## Beschreibung

Die Erfindung betrifft ein Verfahren zum Betreiben einer HTM-Brennstoffzelle und eine Brennstoffzellenbatterie gemäß dem. Oberbegriff des Patentanspruches 1.

Bekannt ist die Polymer-Elektrolyt-Membran-Brennstoffzelle, die als Elektrolyten ein Basispolymer hat, an dem [-SO₃H]-Gruppen hängen. Die elektrolytische Leitung findet dabei über hydratisierte Protonen statt. Diese Membran braucht entsprechend flüssiges Wasser, d.h. unter Normaldruck Betriebstemperaturen unter 100°C, um die Protonenleitfähigkeit zu gewährleisten. Daraus ergibt sich das Problem, daß die einströmenden Prozeßgase bei Temperaturen oberhalb von ca. 65°C befeuchtet werden müssen.

Ein Ansatzpunkt, die Beschränkung der Betriebstemperatur aufzuheben, ist, daß anstelle der [-SO₃H]-Gruppen enthaltenden Membran eine andere Membran (dabei kann es sich auch um eine Ionenaustauschermembran handeln) und/oder eine Matrix mit freier und/oder physikalisch und/oder chemisch gebundener Phosphorsäure als Elektrolyt einer Brennstoffzelle eingesetzt werden. Diese Brennstoffzelle wird Hochtemperatur-Membran-(HTM)Brennstoffzelle) genannt.

Bei der Realisierung einer Membran-Brennstoffzelle mit freier Phosphorsäure tritt jedoch zumindest ein Problem auf, bei Temperaturen unter 50°C, also beim Starten der Brennstoffzellenanlage, weil Phophorsäure unterhalb 42°C auskristallisiert. Während im flüssigen Zustand der Widerstand des Phosphorsäure-Elektrolyten so gering ist, daß ein autothermes Hochheizen der Zelle möglich ist, steigt bei Vorliegen kristalliner Phosphorsäure im Elektrolyten der Widerstand so sprunghaft an, daß ein Starten der Batterie ohne weitere Maßnahmen nicht funktioniert. Dies ist hauptsächlich ein Problem, wenn die Brennstoffzelle im Start/Stop Betrieb gefahren wird, also z.B. bei der mobilen Anwendung.

Vom druckschriftlichen Stand der Technik sind Brennstoffzellen bekannt, die Phosphorsäure als Elektrolyten enthalten. Diese als PAFC (Phosphoric Acid Fuel Cell) bezeichneten Brennstoffzellen haben eine Festkörpermatrix, in die Phosphorsäure eingelagert ist, wobei diese Brennstoffzellen bei vergleichsweise hohen Temperaturen betrieben werden. Da bekannt ist, daß Phosphorsäure bei Temperaturen ab 40°C auskristallisiert, werden Additive zur Schmelzpunktserniedrigung hinzugegeben. Im Einzelnen werden in der US 5 219 675 A Salze oder Säuren zur Schmelzpunktserniedrigung beschrieben. Speziell in der US 5 302 471 A wird der beim Arbeiten bei hohen Temperaturen entstehende Wasserdampf beim Abkühlen als Wasser kondensiert und in den einzelnen Elektrodeneinheiten mit Phosphorsäure unter Schmelzpunkterniedrigung aufgenommen, aus denen es bei Betrieb der Brennstoffzellen wieder verdampft. Schließlich ist aus der älteren, nicht vorveröffentlichten JP 11-154529 A speziell eine PEM-Brennstoffzellenanordnung bekannt, bei der über den vorgeschalteten Reformer Wasserdampf eingespeist wird.

Aufgabe der Erfindung ist es daher, ein Verfahren zum Betreiben einer HTM-Brennstoffzelle mit phosphorsäurehaltigem Elektrolyten zu geben, durch das ein autothermes Hochheizen der Brennstoffzelle bei Temperaturen unter 40°C möglich ist.

Die Aufgabe ist erfindungsgemäß durch die Maßnahmen des Patentanspruches 1 gelöst. Weiterbildungen sind in den Unteransprüchen angegeben. Insbesondere im Patentanspruch 6 ist ein Verfahren zum Start/Stop-Betrieb einer Brennstoffzellenbatterie angegeben.

Beim erfindungsgemäßen Verfahren zum Betreiben einer HTM-Brennstoffzelle wird dem der im Elektrolyten enthaltenen Phosphorsäure zumindest ein Additiv zugesetzt, das bewirkt, daß der Gefrierpunkt der Phosphorsäure im Elektrolyten erniedrigt wird. Dazu enthält der Elektrolyt HTM-Brennstoffzellen der Phosphorsäure, wobei der Phosphorsäure zumindest ein Additiv zugesetzt ist, durch das eine Gefrierpunktserniedrigung der Phosphorsäure einstellbar ist.

Bei einer zugehörigen HTM-Brennstoffzellenbatterie, die einen Stack mit zumindest einer Brennstoffzelleneinheit umfaßt, enthält die Brennstoffzelleneinheit Phosphorsäure im Elektrolyten enthält, deren Gefrierpunkt erniedrigt ist.

Als Hochtemperatur-Membran-(HTM)-Brennstoffzelle wird jede Brennstoffzelle bezeichnet, die eine herkömmliche Elektrolyt-Membran und/oder die eine Membran als Matrix zur physikalischen und/oder chemischen Aufnahme des Elektrolyten als Kernstück enthält und deren Betriebstemperatur höher als die der herkömmlichen PEM-Brennstoffzelle ist, also höher als 80°C, bevorzugt höher als 100°C. Die maximale Betriebstemperatur liegt in etwa bei 220°C. Die HTM-Brennstoffzelle hat einen Elektrolyten, der gute Leitfähigkeit im nicht-wässrigen Milieu bei den oben genannten Temperaturen besitzt.

Nach einer vorteilhaften Ausgestaltung der Erfindung ist das Additiv Wasser, das in einer Menge von 20 - 80 Gew%, bevorzugt 30-60 Gew% und insbesondere bevorzugt von 40-57 Gew% zugesetzt wird. Beim Betrieb verdunstet das Wasser ohne Rückstand.

Nach einer vorteilhaften Ausgestaltung des Verfahrens wird beim Abkühlen der Brennstoffzellenbatterie, wenn die Temperatur des Elektrolyten zwischen 100 und 45°C beträgt, dem Elektrolyten eine definierte Wassermenge zudosiert, durch Wahl der Betriebsparameter eingestellt und/oder es wird mit Hilfe des Platinkatalysators Wasser in der Zelle erzeugt und somit die richtige Verdünnung eingestellt.

Die Erzeugung von Wasser mit Hilfe des Platinkatalysators geschieht dadurch, daß der Anode Luft und/oder der Kathode Wasserstoff zudosiert wird, so daß der Katalysator als Katalytbrenner die beiden Gase kontrolliert rekombiniert und dabei Wasser produziert, so daß Produktwasser bei Temperaturen unter 100°C nicht mehr gasförmig durch das Kathodenabgas abtransprotiert wird, sondern den Elektrolyten verdünnt.

Zur Steuerung der Wasser und/oder Additiv-Zugabe wird z.B. der elektrische Widerstand der Zelle überwacht. In Abhängigkeit von der Umgebungstemperatur und z.B. der Jahreszeit kann dann die Gefrierpunktserniedrigung gezielt, z.B. unter Berücksichtigung des Phasendiagramms H₃PO₄/H₂O eingestellt werden. Zur Regelung der Gefrierpunktserniedrigung ist nach einer Ausführungsform ein Steuergerät vorgesehen in das zumindest folgende Daten eingehen (input): gewünschter Gefrierpunkt, momentaner Elektrolytwiderstand und die momentane Temperatur in der Zelle. Das Steuergerät regelt dann (output) die Menge und /oder Dauer der Zugabe an Wasser zum Elektrolyten (gegebenenfalls indirekt über Zudosierung an Oxidans zur Anode und/oder an Brennstoff zur Kathode).

Der HTM-Brennstoffzellen-Elektrolyt enthält Phosphorsäure, deren normaler Gefrierpunkt von 42 °C durch Zugabe zumindest eines Additivs soweit erniedrigt ist, daß ein Start/Stop-Betrieb der Brennstoffzelle, wie er z.B. in der mobilen Anwendung der Brennstoffzelle gefordert wird, realisierbar ist.

## Patentansprüche

1. Verfahren zum Betreiben einer HTM-Brennstoffzelle, bei der im Elektrolyten Phosphorsäure zugesetzt wird, wobei der Phosphorsäure zumindest Wasser als Additiv zugesetzt wird, mit dem der Gefrierpunkt der Phosphorsäure erniedrigt wird, **dadurch gekennzeichnet, daß** während des Abkühlens der HTM-Brennstoffzelle von der Arbeitstemperatur der Zelle Wasser in einer Menge von 30 bis 60 Gew.-% der Phosphorsäure zudosiert und/oder in der Zelle erzeugt wird, wodurch die Gefrierpunktserniedrigung der Phosphorsäure in gewünschtem Maße einstellbar ist.

2. Verfahren nach Anspruch 1, **dadurch gekennzeichnet, daß** eine Wassermenge im Bereich von 40 bis 57 Gew.-% der Phosphorsäure gewählt wird.

3. Verfahren nach Anspruch 1 oder Anspruch 2, **dadurch gekennzeichnet, daß** eine Wassermenge, die eine Gefrierpunktserniedrigung der Phosphorsäure um zumindest 40°C bewirkt, gewählt wird.

4. Verfahren nach Anspruch 1 oder Anspruch 2, unter Verwendung von Wasserstoff als Brenngas und Luft als Oxidans, **dadurch gekennzeichnet, daß** an der Anode dem Wasserstoff Luft und an der Kathode dem Sauerstoff Wasserstoff in einer Menge zudosiert wird, daß die erzeugte Wassermenge eine Gefrierpunktserniedrigung von zumindest 40°C bewirkt.

5. Verfahren nach einem der vorhergehenden Ansprüche, **dadurch gekennzeichnet, dass** zur Steuerung der Wasserzugabe und/oder der Wassererzeugung der elektrische Widerstand der Zelle überwacht wird.

6. Verfahren nach einem der vorhergehenden Ansprüche, **gekennzeichnet durch** einen Start/Stop-Betrieb, einer HTM-Brennstoffzellenbatterie, die einen Stack mit zumindest einer Brennstoffzelleneinheit, die Phosphorsäure und Wasser im Elektrolyten enthält, bei mobilen Anwendungen umfaßt.

## Claims

1. Method for operating an HTM fuel cell, in which phosphoric acid is added in the electrolyte, at least water being added to the phosphoric acid as an additive, by means of which the freezing point of the phosphoric acid is reduced, **characterized in that** during the cooling of the HTM fuel cell from the operating temperature of the cell, water is metered to the phosphoric acid and/or produced in the cell in an amount of from 30 to 60% by weight, with the result that the reduction in the freezing point of the phosphoric acid can be adjusted to the desired extent.

2. Method according to Claim 1, **characterized in that** a quantity of water in the range from 40 to 57% by weight of the phosphoric acid is selected.

3. Method according to Claim 1 or 2, **characterized in that** a quantity of water which has the effect of reducing the freezing point of the phosphoric acid by at least 40°C is selected.

4. Method according to Claim 1 or 2, using hydrogen as fuel gas and air as oxidizing agent, **characterized in that** air is metered to the hydrogen at the anode and hydrogen is metered to the oxygen at the cathode, in quantities which are such that the quantity of water produced has the effect of reducing the freezing point by at least 40°C.

5. Method according to one of the preceding claims, **characterized in that** the electrical resistance of the cell is monitored in order to control the addition of water and/or the production of water.

6. Method according to one of the preceding claims, **characterized by** stop/start operation of an HTM fuel cell battery, which comprises a stack with at least one fuel cell unit, which contains phosphoric acid and water in the electrolyte, for mobile applications.

## Revendications

1. Procédé pour faire fonctionner une pile à combustible HTM, dans lequel on ajoute de l'acide phosphorique à l'électrolyte, en ajoutant à l'acide phosphorique en tant qu'additif au moins de l'eau par laquelle on abaisse le point de congélation de l'acide phosphorique, **caractérisé en ce que**, pendant le refroidissement de la pile à combustible HTM à partir de la température de fonctionnement de la pile, on ajoute de manière dosée et/ou on produit dans la pile de l'eau en une quantité représentant de 30 à 60 % du poids de l'acide phosphorique, ce qui permet de régler dans la mesure souhaitée l'abaissement du point de congélation de l'acide phosphorique.

2. Procédé suivant la revendication 1, **caractérisé en ce que** l'on choisit une quantité d'eau représentant de l'ordre à 40 à 57 % du poids de l'acide phosphorique.

3. Procédé suivant la revendication 1 ou la revendication 2, **caractérisé en ce que** l'on choisit une quantité d'eau qui provoque un abaissement du point de congélation de l'acide phosphorique d'au moins 40°C.

4. Procédé suivant la revendication 1 ou la revendication 2, en utilisant de l'hydrogène comme gaz combustible et de l'air comme oxydant, **caractérisé en ce que** l'on ajoute de manière dosée à l'anode de l'air à l'hydrogène et à la cathode de l'hydrogène à l'oxygène en une quantité telle que la quantité d'eau produite provoque l'abaissement du point de congélation d'au moins 40°C.

5. Procédé suivant l'une des revendications précédentes, **caractérisé en ce que** pour se rendre maître de la quantité d'eau ajoutée et/ou de la production d'eau, on contrôle la résistance électrique de la pile.

6. Procédé suivant l'une des revendications précédentes, **caractérisé par** un fonctionnement marche/arrêt d'une batterie de piles à combustible HTM, qui comprend pour des applications mobiles un empilement ayant au moins une unité de pile à combustible qui contient de l'acide phosphorique et de l'eau dans l'électrolyte.
